# EUROPÄISCHE PATENTSCHRIFT

(11) **EP 0 842 591 B1**
(45) Veröffentlichungstag und Bekanntmachung des Hinweises auf die Patenterteilung: **26.05.1999**
(21) Anmeldenummer: 96934345.8
(22) Anmeldetag: 31.07.1996
(51) Int. Cl.: H05B 7/06

(54) **BODENELEKTRODE FÜR EINEN MIT GLEICHSTROM BETRIEBENEN LICHTBOGENOFEN UND VERFAHREN ZUM BETREIBEN DES OFENS**
BOTTOM ELECTRODE FOR AN ARC FURNACE OPERATED WITH DIRECT CURRENT AND PROCESS FOR OPERATING THE FURNACE
ELECTRODE DE FOND POUR UN FOUR A ARC FONCTIONNANT AVEC DU COURANT CONTINU ET PROCEDE PERMETTANT DE FAIRE FONCTIONNER CE FOUR

(30) Priorität: 04.08.1995 DE 19529984
(43) Veröffentlichungstag der Anmeldung: 20.05.1998
(73) Patentinhaber: MANNESMANN Aktiengesellschaft, 40213 Düsseldorf (DE)
(72) Erfinder: HOFMANN, Werner, D-47441 Moers (DE)
(74) Vertreter: Meissner, Peter E., Dipl.-Ing.
(86) Internationale Anmeldenummer: DE9601486
(87) Internationale Veröffentlichungsnummer: WO9706653

(56) Entgegenhaltungen:
- EP-A- 0 642 294
- DE-A- 2 637 632
- FR-A- 2 622 078

## Beschreibung

Die Erfindung betrifft eine Bodenelektrode für einen mit Gleichstrom betriebenen Elektro-Lichtbogenofen, bestehend aus zwei miteinander verbindbaren, verschiedene Werkstoffe aufweisenden Teilen, wobei ein im Bereich der Feuerfestauskleidung des Ofengefäßbodens angeordneter aus mit der Schmelze vergleichbaren Werkstoff bestehender Verschleißteil und ein aus dem Ofengefäß herausragender mit einem Kühlmedium durchströmter Kühlteil vorhanden ist.

Aus der DE-OS 43 35 065 ist eine gattungsgemäße Bodenelektrode bekannt, bei dem der Verschleißteil eine die Strömung des während des Betriebes im Stimbereich aufgeschmolzenen Materials wie auch der Metallschmelze behindernde Form aufweist. Der Stimbereich des metallischen Verschleißteils wird dabei von einem Bauteil aus hochtemperaturfestem Werkstoff umhüllt, das eine mit dem metallischen Bauteil korrespondierende komplementäre Form besitzt.

Nachteile der aus dieser Schrift bekannten Bodenelektrode ist es, daß im Stirnbereich des Verschleißteils die Strömungsgeschwindigkeit im Vergleich zur üblichen Ausgestaltung von Bodenelektroden zwar geringer aber immer noch so hoch ist, daß es zu Restauswaschungen kommt.

Hinzu tritt, daß die Strömung die Form eines Wirbels aufweist und das aus hochtemperaturfestem Werkstoff bestehende, den Verschleißteil komplementär umhüllende Bauteil die Form einer Hülse hat, durch die die Strömungsgeschwindigkeit nicht ausreichend abgebremst wird.

Die Erfindung hat sich das Ziel gesetzt, eine Bodenelektrode für einen mit Gleichstrom betriebenen Elektro-Lichtbogenofen zu schaffen, die einen intensiven Übergang des Stroms und der Wärme in die Schmelze aufweist und dabei eine hohe Verschleißfestigkeit besitzt.

Erreicht wird das Ziel durch die kennzeichnenden Merkmale des Vorrichtungsanspruchs 1 und des Verfahrensanspruchs 9.

Bei der erfindungsgemäßen Bodenelektrode wird der Verschleißteil in einem zylindrischen Loch in der Weise angeordnet, daß seine Stirn von den Innenfläche des aus Feuerfestmaterial bestehenden Ofenbodens entfernt ist. In diesem Freiraum wird ein aus Feuerfestmaterial bestehender Körper eingebracht, der eine Form aufweist, die die Strömungsbewegung der während des Ofenbetriebes ihn umströmenden Schmelze abbremst. Diese Strömungsbremse besteht aus hochwertigem verschleißfestem Feuerfestmaterial. Sie weist eine Form auf, die nicht nur gegenüber dem thermischen und chemischen Belastungen, sondem auch gegenüber Erosionen standfest ist. Ihre körperliche Ausgestaltung ist so gewählt, daß der Strömung der Schmelze ein größtmöglicher Widerstand entgegengebracht wird. Dabei ist die Strömungsbremse in der Weise angeordnet, daß sie nicht von der Strömung aus dem Freiraum herausgespült werden kann. Dies wird einmal dadurch verhindert, daß der Strömungskörper ein selbstständiges Bauteil darstellt, das formschlüssig mit dem den Verschleißteil umgehenden Feuerfestmaterial verbunden ist. In einer vorteilhaften Ausgestaltung wird die Strömungsbremse aus an einer den Verschleißteil umhüllenden Hülse angeordneten Flügeln gebildet. Diese Flügel können dabei koaxial zur Hauptachse der Bodenelektrode, aber auch senkrecht zu dieser ausgerichtet sein.

Durch eine sternförmige Strömungsbremse gelingt es, den freien Strömungsquerschnitt zu reduzieren und so die Strömung der Schmelze zu behindern. Das Aufschwimmen der Strömungsbremse aufgrund der kleineren Dichte des Feuerfestmaterials gegenüber dem Flüssigstahl wird durch die oben beschriebene Halterung oder eine unmittelbare Verbindung mit der Elektrodenhülse verhindert, wobei vor dem Erststart des Gleichstromofens in den Freiraum feinkömiger Stahlschrott eingegeben wird. Bei den darauf folgenden Schmelzen wird der Freiraum im Bereich der Strömungsbremse durch Schmelze gefüllt.
Ein Beispiel der Erfindung ist in der beigefügten Zeichnung dargelegt. Dabei zeigen:
- Figur 1: eine Bodenelektrode mit sternförmiger Strömungsbremse
- Figur 2: eine Strömungsbremse mit einer Hülse mit Flügelstummeln
- Figur 3: eine Strömungsbremse mit einer Hülse mit Ringelementen

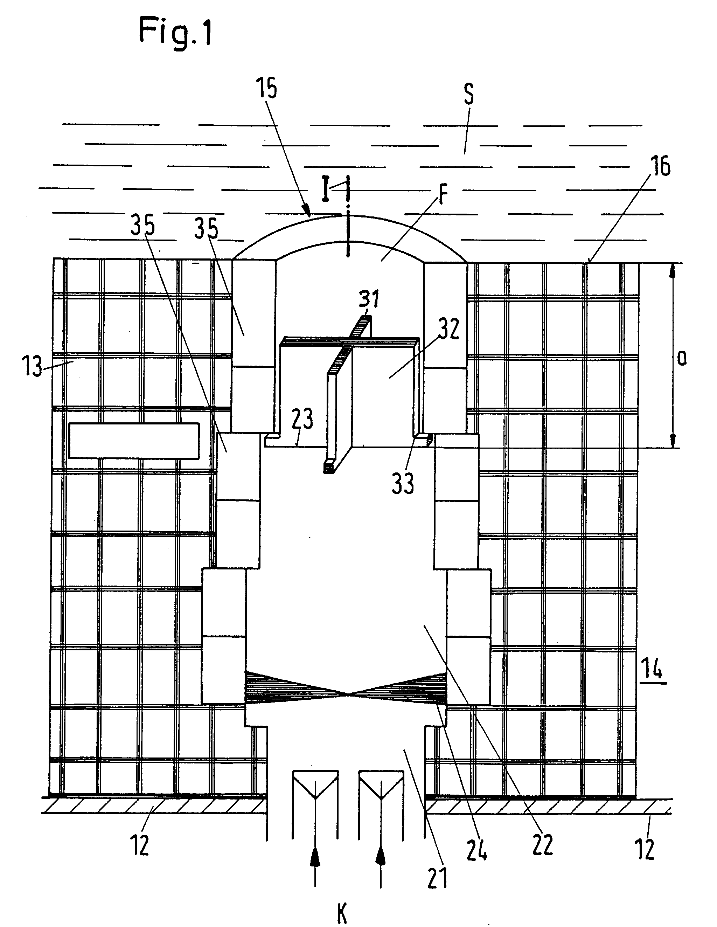

Die Figur 1 zeigt einen Ausschnitt aus einem Ofengefäßboden 14 mit einem Gefäßmantel 12 und einer Feuerfestauskleidung 13, in der ein Loch 15 eingebracht ist.

Im Loch 15 ist eine Bodenelektrode angeordnet, die ein Kühlteil 21 und ein Verschleißteil 22, welche durch eine Schweißnaht 24 miteinander verbunden sind, aufweist.

Die Verschleißteil-Stirn 23 ist mit dem Abstand a von der Innen-Fläche des Ofengefäßbodens 16 entfernt angeordnet. In den von der Stirn 23 des Verschleißteils und der Innenfläche einer den Verschleißteil 22 umgebenden Hülse gebildeten Freiraum wird ein als Strömungsbremse ausgebildeter Körper 31 eingebracht.

In den Figuren 1 bis 3 sind grundsätzliche Formen einer Strömungsbremse aufgeführt als Beispiel einfacher und standfester Ausgestaltungen zur Abbremsung der während des Ofenbetriebes strömenden Schmelze S.

In Figur 1 ist die Strömungsbremse ein sternförmiger, mit Flügeln 32 versehener Körper 31, an dessen Fußende Formelemente 33 zum Positionieren oberhalb der Stirn 23 des Verschleißteils 22 vorgesehen sind. In vorteilhafter Weise sind die Formelemente 33 formschlüssig mit der Hülse 35 verbunden.

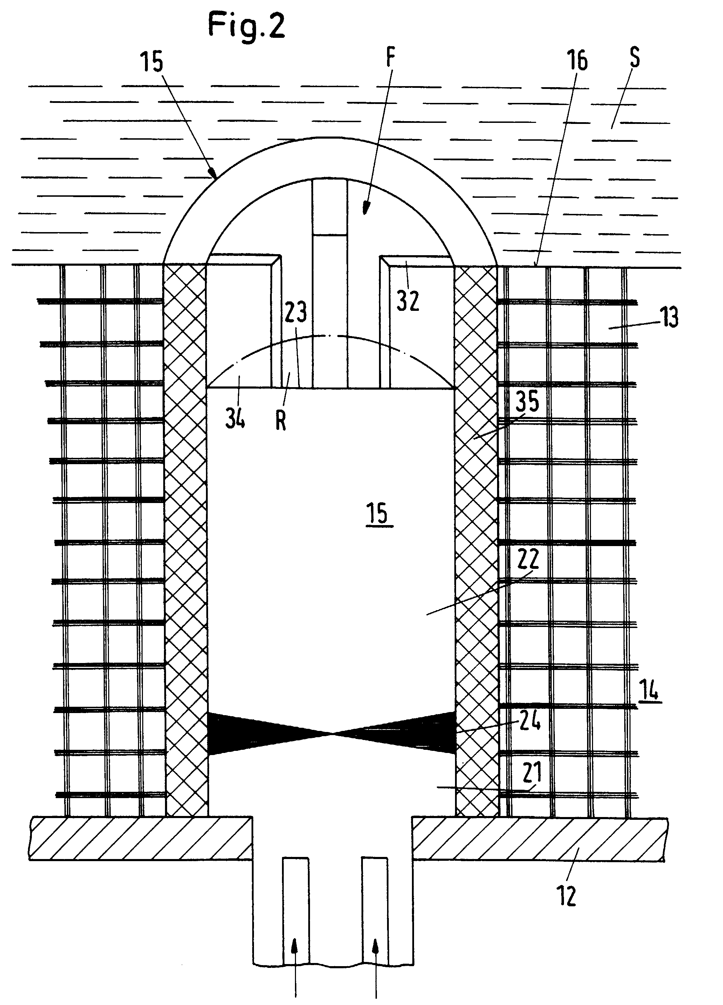

In der Figur 2 weist die Strömungsbremse Flügelstummel 34 auf, die unmittelbar an der Hülse 35 befestigt sind.

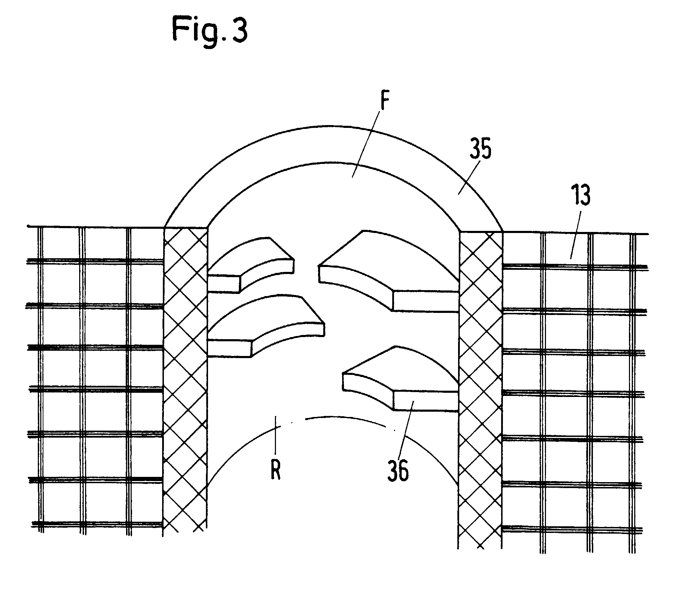

In der Figur 3 weist die Strömungsbremse Ringelemente 36 auf, die an der Hülse 35 befestigt sind.

### Positionsliste

### Elektro-Lichtbogenofen

- 12: Gefäßmantel
- 13: Feuerfestauskleidung
- 14: Ofengefäßboden
- 15: Loch
- 16: Innen-Fläche des Ofengefäßbodens

### Bodenelektrode

- 21: Kühlteil
- 22: Verschleißteil
- 23: Stim des Verschleißteils
- 24: Schweißnaht

### Körper/Strömungsbremse

- 31: Sternförmige Strömungsbremse
- 32: Flügel der sternförmigen Strömungsbremse
- 33: Formelement zum Positionieren
- 34: Flügelstummel
- 35: Hülse
- 36: Ringelement
- s: Schmelze
- a: Abstand
- F: Freiraum
- I: Elektrodenhauptachse

## Patentansprüche

1. Bodenelektrode für einen mit Gleichstrom betriebenen Elektro-Lichtbogenofen, mit zwei miteinander verbindbaren, verschiedene Werkstoffe aufweisenden Teilen (21, 22), wobei ein im Bereich der Feuerfestauskleidung (13) des Ofengefäßbodens (14) angeordneter aus mit der Schmelze vergleichbaren Werkstoff bestehender Verschleißteil (22) und ein aus dem Ofengefäß herausragender von einem Kühlmedium durchströmter Kühlteil (21) vorhanden ist,
dadurch gekennzeichnet,
daß der Verschleißteil (22) in einem in der Feuerfestauskleidung (13) des Ofengefäßbodens (14) eingebrachten zylindrischen Loch (15) angeordnet und seine dem Ofengefäßinneren zugewandte Stirn (23) von der Innenfläche (16) des Ofenbodens (14) um eine Strecke (a) beabstandet ist,
daß in dem aus der Stirn (23), der Innenfläche (16) und der Wandung des Loches (15) gebildeten Freiraum (F) ein aus Feuerfestmaterial bestehender Körper (31) angeordnet ist, der eine Form aufweist, die die Bewegung der während des Ofenbetriebes ihn umströmende Schmelze (S) abbremst.

2. Bodenelektrode nach Anspruch 1,
dadurch gekennzeichnet,
daß der die Schmelzenströmung behindernde Körper (31) im Schnitt sternförmig ausgebildet ist und mindestens drei Flügel (32) besitzt, deren innere Flächenränder im Zentrum miteinander verbunden sind.

3. Bodenelektrode nach Anspruch 2,
dadurch gekennzeichnet,
daß die Flügel (32) an der dem Verschleißteil zugewandten Ende radial sich erstreckende, für das formschlüssige Positionieren des sternförmigen Strömungskörpers (31) vorgesehene Formelemente (33) aufweist.

4. Bodenelektrode nach Anspruch 1,
dadurch gekennzeichnet,
daß der die Schmelzenströmung behindemde Körper aus mindestens drei Flügelstummeln (34) aufgebaut ist, die an einer aus gleichem Feuerfestmaterial aufgebauten Hülse (35) angeordnet sind, welche den Verschleißteil (22) konzentrisch umhüllt.

5. Bodenelektrode nach Anspruch 4,
dadurch gekennzeichnet,
daß die Flächen der Flügelstummel (34) achsparallel zur Elektrodenhauptachse (I) angeordnet sind.

6. Bodenelektrode nach Anspruch 4,
dadurch gekennzeichnet,
daß die Flächen der Flügelstummel (34) schraubenförmig zur Elektrodenhauptachse (I) angeordnet sind.

7. Bodenelektrode nach Anspruch 1,
dadurch gekennzeichnet,
daß der die Schmelzenströmung behindernde Körper aus Ringelementen (36) aufgebaut ist, die senkrecht zur Elektrodenhauptachse (I) an einer aus gleichem Feuerfestmaterial aufgebauten Hülse (35) angeordnet sind, die den Verschleißteil (22) konzentrisch umhüllt.

8. Bodenelektrode nach Anspruch 4 oder 7,
dadurch gekennzeichnet,
daß die Hülse (35) im Loch (15) der Feuerfestauskleidung (13) bis zum Gefäßmantel (12) geführt ist.

9. Verfahren zum Betreiben eines mit Gleichstrom beheizten ElektroLichtbogenofens mit einer einen Verschleißteil (22) und einen Kühlteil (21) aufweisenden Bodenelektrode, die in einem Loch (15) der Feuerfestauskleidung (13) des Gefäßbodens (14) angeordnet ist, nach einem der o.g. Ansprüche,
dadurch gekennzeichnet,
daß vor dem Erststart der Bodenelektrode in den verbleibenden Restraum (R), der begrenzt wird von dem aus Feuerfestmaterial aufgebauten Freiraum zwischen der Stim (23) des Verschleißteils (22) und der Fläche (16) des Ofengefäßbodens (14), Stahlschrott eingefüllt wird.

## Claims

1. A base electrode for an electric arc furnace operated with direct current, having two parts (21, 22) which can be connected together and are made of different materials, with a wearable part (22) arranged in the region of the refractory lining (13) of the furnace vessel base (14) and consisting of material comparable with the melt and a cooling part (21) projecting out of the furnace vessel and through which a cooling medium flows,
characterised in that the wearable part (22) is arranged in a cylindrical hole (15) made in the refractory lining (13) of the furnace vessel base (14) and its end face (23) which faces the interior of the furnace vessel is spaced apart from the inner surface (16) of the furnace base (14) by a distance (a), a body (31) made of refractory material is arranged in the space (F) formed of the end face (23), the inner surface (16) and the walls of the hole (15), which body has a shape which slows the movement of the melt (S) which flows around it during operation of the furnace.

2. A base electrode according to Claim 1,
characterised in that the body (31) which hinders the flow of melt is star-shaped in section and has at least three wings (32), the inner surface edges of which are joined together in the centre.

3. A base electrode according to Claim 2,
characterised in that the wing (32) on the end facing the wearable part has radially-extending shaped elements (33) provided for the positive positioning of the star-shaped flow body (31).

4. A base electrode according to Claim 1,
characterised in that the body hindering the melt flow is constructed of at least three wing stumps (34) which are arranged on a sleeve (35) constructed of the same refractory material, which concentrically surrounds the wearable part (22).

5. A base electrode according to Claim 4,
characterised in that the surfaces of the wing stumps (34) are arranged paraxially to the main axis (I) of the electrode.

6. A base electrode according to Claim 4,
characterised in that the surfaces of the wing stumps (34) are arranged helically relative to the main axis (I) of the electrode.

7. A base electrode according to Claim 1,
characterised in that the body hindering the melt flow is constructed of annular elements (36) which are arranged at right-angles to the main axis (I) of the electrode on a sleeve (35) constructed of the same refractory material, which concentrically surrounds the wearable part (22).

8. A base electrode according to Claim 4 or 7,
characterised in that the sleeve (35) is guided in the hole (15) in the refractory lining (13) as far as the vessel casing (12).

9. A method for operating an electric arc furnace heated with direct current, having a base electrode which has a wearable part (22) and a cooling part (21), which electrode is located in a hole (15) in the refractory lining (13) of the vessel base (14), according to one of the above claims,
characterised in that before the first startup of the base electrode steel scrap is poured into the remaining space (R) which is defined by the space constructed of refractory material between the end face (23) of the wearable part (22) and the surface (16) of the furnace vessel base (14).

## Revendications

1. Electrode de fond pour un four à arc électrique fonctionnant en courant continu, comportant deux pièces (21,22), pouvant être reliées ensemble, présentant différentes matières, une pièce d'usure (22), agencée dans la zone du revêtement réfractaire (13) du fond (14) du récipient de four et constituée d'une matière comparable à la matière en fusion, et une pièce de refroidissement (21) faisant saillie du récipient de four traversée par un fluide de refroidissement étant prévues,
caractérisée en ce que la pièce d'usure (22) est agencée dans un trou cylindrique (15) prévu dans le revêtement réfractaire (13) du fond (14) du récipient de four et son front (23) en regard de l'intérieur du récipient du four est écarté de la surface interne (16) du fond de four (14) d'une distance (a), en ce que, dans l'espace libre (F) formé par le front (23), la surface interne (16) et la paroi du trou (15), il est agencé un corps (31) constitué d'une matière réfractaire qui présente une forme qui freine le mouvement de la matière en fusion (S), pendant le fonctionnement du four, traversant celui-ci.

2. Electrode de fond selon la revendication 1,
caractérisée en ce que le corps (31) entravant l'écoulement de la matière en fusion est réalisé en coupe en forme d'étoile et possède au moins trois ailettes (32), dont les bords internes sont reliés ensemble au centre.

3. Electrode de fond selon la revendication 2,
caractérisée en ce que les ailettes (32) présentent, à l'extrémité en regard de la pièce d'usure, des éléments moulés (33), s'étendant radialement, prévus pour le positionnement mécanique du corps d'écoulement (31) en forme d'étoile.

4. Electrode de fond selon la revendication 1,
caractérisée en ce que le corps entravant l'écoulement de la matière en fusion est réalisé à partir d'au moins trois tronçons d'ailette (34), qui sont agencés sur un manchon (35) réalisé en la même matière réfractaire, lequel entoure de façon concentrique la pièce d'usure (22).

5. Electrode de fond selon la revendication 4,
caractérisée en ce que les surfaces des tronçons d'ailette (34) sont agencées de façon parallèle à l'axe par rapport à l'axe principal (I) de l'électrode.

6. Electrode de fond selon la revendication 4,
caractérisée en ce que les surfaces des tronçons d'ailettes (34) sont agencées sous forme hélicoïdale par rapport à l'axe principal (I) de l'électrode.

7. Electrode de fond selon la revendication 1,
caractérisée en ce que le corps entravant l'écoulement de la matière en fusion est réalisé à partir d'éléments annulaires (36) qui sont agencés perpendiculairement à l'axe principal (I) de l'électrode sur un manchon (35) réalisé en la même matière réfractaire, qui entoure concentriquement la pièce d'usure (22).

8. Electrode de fond selon la revendication 4 ou 7,
caractérisée en ce que le manchon (35) est guidé dans le trou (15) du revêtement réfractaire (13) jusqu'à l'enveloppe (12) du récipient.

9. Procédé pour faire fonctionner un four à arc électrique chauffé par du courant continu, comportant une électrode de fond présentant une pièce d'usure (22) et une pièce de refroidissement (21), qui est agencée dans un trou (15) du revêtement réfractaire (13) du fond (14) du récipient, selon une des revendications précédentes,
caractérisé en ce que, avant le premier démarrage de l'électrode de fond, des ferrailles d'acier sont introduites dans l'espace résiduel restant (R), qui est limité par l'espace libre réalisé en matière réfractaire entre le front (23) de la pièce d'usure (22) et la surface (16) du fond (14) du récipient de four.
